# EUROPEAN PATENT APPLICATION

(11) **EP 4 708 077 A1**
(43) Date of publication of application: **11.03.2026**
(21) Application number: 25185969.0
(22) Date of filing: 27.06.2025
(51) Int. Cl.: G06F 16/532, G06F 16/58, G06F 16/583

(54) **INFORMATION PROCESSING METHOD AND DEVICE, AND PRODUCT QUERY METHOD AND DEVICE**

(30) Priority: 04.09.2024 CN 202411238502
(71) Applicant: Hangzhou Alibaba International Internet Industry Co., Ltd., Hangzhou City, Zhejiang Province (CN)
(72) Inventor: LIU, Tingting, Hangzhou City (CN); JIANG, Wen, Hangzhou City (CN); JIN, Linbo, Hangzhou City (CN); ZHANG, Guannan, Hangzhou City (CN)
(74) Representative: Wu, Ting

(57) **Abstract**

The embodiments of the present disclosure provide an information processing method and apparatus, as well as a product query method and apparatus. The information processing method includes: obtaining image-text query information comprising image query information and text query information, and determining an information attribute type corresponding to the image-text query information; identifying the image query information and the text query information within the image-text query information, and constructing image-text fusion information based on the image query information and the text query information; performing object retrieval for the image query information, the text query information, and the image-text fusion information respectively to obtain an image-retrieved object, a text-retrieved object, and an image-text retrieved object; ranking the image-retrieved object, the text-retrieved object, and the image-text retrieved object according to the information attribute type, and determining a target object corresponding to the image-text query information based on a ranking result.

## Description

### CROSS-REFERENCE TO RELATED APPLICATIONS

**This** application claims priority to Chinese Patent Application No. 202411238502.8, filed with the China National Intellectual Property Administration on September 4, 2024, and entitled "Information Processing Method and Device, and Product Query Method and Device".

### TECHNICAL FIELD

The present disclosure relates to the field of information processing technology, and more particularly, to an information processing method and apparatus, and a product query method and apparatus.

### BACKGROUND

With the development of computer and internet technologies, query services are increasingly applied in various scenarios, such as online shopping, Q&A sessions, order tracking, and information retrieval. These scenarios involve the use of query services. As users' query needs become more diverse, platforms that support query services generally offer both image-based and text-based query methods. These methods allow users to query relevant information on the platform by either uploading an image or editing detailed textual information, thereby fulfilling their query requirements. In the existing technology, while query services can be provided through either image-based or text-based approaches, the results from a single image or text query may not always meet user expectations. Furthermore, these query methods tend to cover a narrower range of information and result in less comprehensive query outcomes. Therefore, an effective solution is urgently needed to address these issues.

### SUMMARY

In view of the foregoing, the embodiments of the present disclosure provide an information processing method. One or more embodiments of the present disclosure also relate to an information processing apparatus, a product query method, a product query apparatus, a computing device, a computer-readable storage medium, and a computer program product, to address the technical deficiencies present in the prior art.

According to a first aspect of the embodiments of the present disclosure, an information processing method is provided, comprising:
obtaining image-text query information comprising image query information and text query information, and determining an information attribute type corresponding to the image-text query information;
identifying the image query information and text query information within the image-text query information, and constructing image-text fusion information based on the image query information and the text query information;
performing object retrieval for the image query information, the text query information, and the image-text fusion information respectively to obtain an image-retrieved object, a text-retrieved object, and an image-text retrieved object;
ranking the image-retrieved object, text-retrieved object, and the image-text retrieved object according to the information attribute type, and determining a target object corresponding to the image-text query information based on a ranking result.

According to a second aspect of the embodiments of the present disclosure, a product query method is provided, comprising:
obtaining image-text query information and determining the information attribute type corresponding to the image-text query information;
identifying the image query information and text query information within the image-text query information, and constructing image-text fusion information based on the image query information and the text query information;
performing product retrieval for the image query information, the text query information, and the image-text fusion information respectively to obtain image-retrieved product, text-retrieved product, and image-text retrieved product;
ranking the image-retrieved product, text-retrieved product, and image-text retrieved product based on the information attribute type, and determining a target product corresponding to the image-text query information based on a ranking result.

According to a third aspect of the embodiments of the present disclosure, another product query method is provided, comprising:
obtaining image-text query information submitted by a user through a product query interface and determining an information attribute type corresponding to the image-text query information;
identifying the image query information and text query information within the image-text query information, and constructing image-text fusion information based on the image query information and the text query information;
performing product retrieval for the image query information, the text query information, and the image-text fusion information respectively to obtain image-retrieved product, text-retrieved product, and image-text retrieved product;
ranking the image-retrieved product, the text-retrieved product, and the image-text retrieved product according to the information attribute type, and determining the target product corresponding to the image-text query information based on the ranking results.
updating the product query interface to a product display interface containing the target product, and presenting the product display interface to the user.

According to a fourth aspect of the embodiments of the present disclosure, an information processing apparatus is provided, comprising:
an acquisition module, configured to acquire image-text query information and determine an information attribute type corresponding to the image-text query information;
a determination module, configured to identify image query information and text query information within the image-text query information, and to construct image-text fusion information based on the image query information and the text query information;
a retrieval module, configured to perform object retrieval for the image query information, the text query information, and the image-text fusion information respectively to obtain an image-retrieved object, a text-retrieved object, and an image-text retrieved object;
a ranking module, configured to rank the image-retrieved object, the text-retrieved object, and the image-text retrieved object based on the information attribute type, and to determine a target object corresponding to the image-text query information based on a ranking result.

According to a fifth aspect of the embodiments of the present disclosure, a product query apparatus is provided, comprising:
an information acquisition module, configured to acquire image-text query information and determine an information attribute type corresponding to the image-text query information;
an information determination module, configured to identify image query information and text query information within the image-text query information, and to construct image-text fusion information based on the image query information and the text query information;
a product retrieval module, configured to perform product retrieval for the image query information, the text query information, and the image-text fusion information respectively to obtain an image-retrieved product, a text-retrieved product, and a image-text retrieved product;
a product ranking module, configured to rank the image-retrieved product, the text-retrieved product, and the image-text retrieved product based on the information attribute type, and to determine a target product corresponding to the image-text query information based on a ranking result.

According to a sixth aspect of the embodiments of the present disclosure, another product query apparatus is provided, comprising:
an information acquisition module, configured to acquire image-text query information submitted by a user though a product query interface and determine an information attribute type corresponding to the image-text query information;
an information determination module, configured to identify image query information and text query information within the image-text query information, and to construct image-text fusion information based on the image query information and the text query information;
a product retrieval module, configured to perform product retrieval for the image query information, the text query information, and the image-text fusion information respectively to obtain an image-retrieved product, a text-retrieved product, and a image-text retrieved product;
a product ranking module, configured to rank the image-retrieved product, the text-retrieved product, and the image-text retrieved product based on the information attribute type, and to determine a target product corresponding to the image-text query information based on a ranking result;
a product display module, configured to update the product query interface to include a product display interface containing the target product, and to display the product display interface to the user.

According to a seventh aspect of the embodiments of the present disclosure, a computing device is provided, comprising:
a memory and a processor;
the memory is configured to store a computer-executable instruction, and the processor is configured to execute the computer-executable instruction; wherein the computer-executable instruction, when executed by the processor, cause the computing device to perform the steps of the aforementioned information processing method or product query method.

According to an eighth aspect of the embodiments of the present disclosure, a computer-readable storage medium is provided, storing a computer-executable instruction, wherein the computer-executable instruction, when executed by a processor, cause the processor to perform the steps of the aforementioned information processing method or product query method.

According to a ninth aspect of the embodiments of the present disclosure, a computer program product is provided, comprising a computer program or instruction, wherein the computer program or instruction, when executed by a processor, cause the processor to perform the steps of the aforementioned information processing method or product query method.

The information processing method provided in this embodiment aims to accurately meet users' query needs by offering a mixed image-text query function. After obtaining the user's input of image-text query information, the method first determines the information attribute type corresponding to the image-text query information. The information attribute type reflects the priority of the queried results. Subsequently, the image query information and text query information within the image-text query information can be identified. At this stage, image-text fusion information is constructed based on the image query information and text query information, enabling the integration of image query and text query information to facilitate subsequent object retrieval using the fused information. On this basis, object retrieval can be performed for the image query information, text query information, and image-text fusion information respectively, thereby obtaining image-retrieved object, text-retrieved object, and image-text retrieved object based on the retrieval results. Considering the varying relevance between the retrieved object and the image-text query information, which corresponds to different query information, the retrieved object is ranked according to the information attribute type. This enables the determination of the target object corresponding to the image-text query information based on the ranking results. Through this process, the method achieves more accurate targeting of user query needs during object query processing, providing users with more precise query results. This enhances the user experience by delivering more relevant and accurate object query feedback for user utilization.

### BRIEF DESCRIPTION OF THE DRAWINGS

FIG. 1 is a schematic diagram of an information processing method provided in one embodiment of the present disclosure;
FIG. 2 is a flowchart of an information processing method provided in one embodiment of the present disclosure;
FIG. 3 is a schematic diagram of a product selection interface in an information processing method provided in one embodiment of the present disclosure;
FIG. 4 is a flowchart of a product query method provided in one embodiment of the present disclosure;
FIG. 5 is a flowchart of another product query method provided in one embodiment of the present disclosure;
FIG. 6 is a flowchart of the processing steps of an information processing method provided in one embodiment of the present disclosure;
FIG. 7 is a schematic diagram of the structure of an information processing apparatus provided in one embodiment of the present disclosure;
FIG. 8 is a schematic diagram of the structure of a product query apparatus provided in one embodiment of the present disclosure;
FIG. 9 is a schematic diagram of the structure of another product query apparatus provided in one embodiment of the present disclosure;
FIG. 10 is a block diagram of the structure of a computing device provided in one embodiment of the present disclosure.

### DETAIL DESCRIPTION OF THE EMBODIMENTS

Numerous specific details are set forth in the following description to facilitate a thorough understanding of the present disclosure. However, the present disclosure may be implemented in many ways other than those specifically described herein. Those skilled in the art may make similar generalizations without departing from the essence of the present disclosure. Therefore, the present disclosure is not limited to the specific embodiments disclosed below.

The terminology used in one or more embodiments of the present disclosure is intended solely for the purpose of describing specific embodiments and is not intended to limit one or more embodiments of the present disclosure. The singular forms "a," "an," "the," and similar expressions used in one or more embodiments of the present disclosure and the appended claims are intended to include plural forms as well, unless the context clearly indicates otherwise. Furthermore the term "and/or" as used in one or more embodiments of the present disclosure refers to and includes any and all possible combinations of one or more of the associated listed items.

Although the terms "first," "second," and the like may be used to describe various information in one or more embodiments of the present disclosure, such information should not be limited by these terms. These terms are used merely to distinguish between information of the same type. For example, without departing from the scope of one or more embodiments of the present disclosure, "first" may also be referred to as "second," and similarly, "second" may also be referred to as "first." Depending on the context, the term "if," as used herein, may be interpreted as "when," "upon," or "in response to determining."

Furthermore, it should be noted that the user information (including, but not limited to, user device information and personal information) and data (including, but not limited to, data used for analysis, storage, and display) involved in one or more embodiments of the present disclosure are all obtained with the user's authorization or full authorization from relevant parties. The collection, use, and processing of such data must comply with the relevant laws, regulations, and standards of the applicable countries and regions. Additionally, appropriate operational interfaces are provided to allow users to choose whether to grant or deny authorization.

In one or more embodiments of the present disclosure, a large model refers to a deep learning model with a large number of model parameters, typically including hundreds of millions, tens of billions, hundreds of billions, trillions, or even tens of trillions of parameters. Large models, also known as foundation models, are pre-trained on large-scale, unlabeled corpora, to obtain pre-trained models with parameters in the range of billions or more. These models are capable of adapting to a wide range of downstream tasks and exhibit strong generalization capabilities. Examples include large language models (LLMs) and multi-modal pre-training models.

In practical applications, large models can be fine-tuned with only a small amount of sample data to adapt the pre-trained model to different tasks. Large models are widely applicable in fields such as Natural Language Processing (NLP) and Computer Vision. Specifically, they can be used in tasks like Visual Question Answering (VQA), Image Captioning (IC), and Image Generation within the field of Computer Vision, as well as text-based tasks such as sentiment classification, text summarization, and machine translation in the field of Natural Language Processing. The main application scenarios for large models include digital assistants, intelligent robots, search engines, online education, office software, e-commerce, and intelligent design, among others.

Firstly, the terminology involved in one or more embodiments of the present disclosure is explained as follows:
Multi-modal Large Model: refers to a model trained by integrating information from a plurality of modalities, such as text, images, videos, and audio. This type of model is capable of fusing multi-modal information to form a unified representation space. Such fusion enables the model to achieve a more comprehensive understanding of the input data, thereby improving the model's accuracy and robustness. Consequently, it enhances the model's performance and broadens its application scope by providing a more holistic and precise understanding of the input.

This disclosure provides an information processing method. One or more embodiments of the present disclosure also relate to an information processing apparatus, a product query method, a product query apparatus, a computing device, a computer-readable storage medium, and a computer program product. These are described in detail individually in the following embodiments.

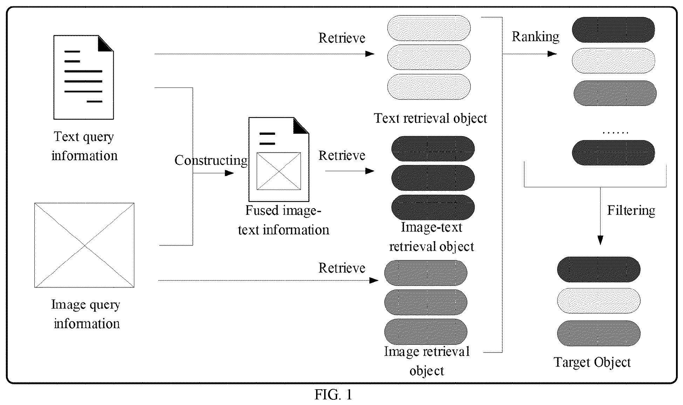

Referring to the schematic diagram shown in FIG. 1, the information processing method provided in this embodiment is designed to accurately address user query needs by offering a mixed image-text query function. After receiving the user's input of image-text query information, the method first determines the information attribute type corresponding to the image-text query information. The information attribute type reflects the priority of the query results. Subsequently, the image query information and text query information within the image-text query information are identified. Based on this, image-text fusion information is constructed by integrating the image query and text query information. This integration enables the subsequent object retrieval process to leverage the fused information. On this basis, object retrieval is performed for the image query information, text query information, and image-text fusion information respectively to obtain image retrieved objects, text retrieved objects, and image-text retrieved objects. Considering the varying relevance of the retrieved objects to the image-text query information, the objects are ranked according to their information attribute type. This ranking helps determine the target object corresponding to the image-text query information based on the ranking results. This process ensures that object query processing more accurately aligns with the user's query intent, enabling more precise and relevant query results to be provided to the user, enhancing usability and user satisfaction.

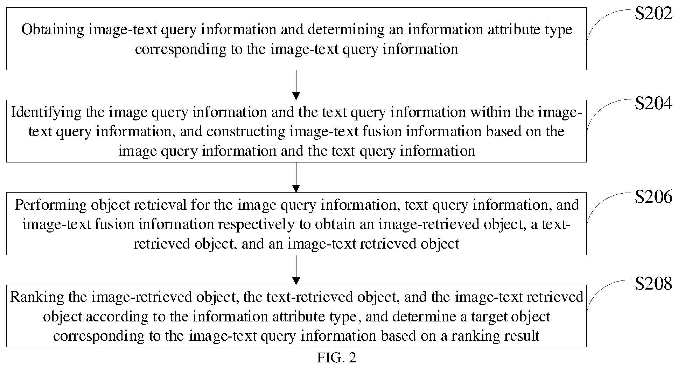

Referring to FIG. 2, FIG. 2 illustrates a flowchart of an information processing method provided in one embodiment of the present disclosure. The method specifically includes the following steps:
**S202:** obtaining image-text query information and determining an information attribute type corresponding to the image-text query information.

The information processing method provided in this embodiment can be applied to any scenario involving information query services, such as information query scenarios (e.g., searching for information on a search platform), online shopping scenarios (e.g., finding products), and question-answering scenarios (e.g., knowledge-based Q&A). Users can combine input image information and/or text information to perform result queries and subsequently receive feedback that accurately meets their query needs. This embodiment uses the example of querying products in an online shopping scenario to illustrate the information processing method. Descriptions of other scenarios can refer to the same or corresponding descriptions in this embodiment, and further elaboration on such scenarios is omitted for brevity.

Specifically, image-text query information refers to a query constructed by combining the user's input of image query information and text query information, which is used for subsequent result queries, such as querying products, articles, orders, etc. Image query information refers to the images input by the user based on their needs. For instance, in a product query scenario, the image may be an image of the product that the user wishes to query. In an article query scenario, the image could be a screenshot of a part of the article content provided by the user. Text query information refers to the description of the user's query intent, which serves as the textual representation of the query needs. In a product query scenario, the text may describe the input image or may be text input by the user independently of the image. Information attribute type refers to the type of attributes corresponding to the image-text query information. It is used to reflect the attribute relationship between the image query information and the text query information in the image-text query. Examples of attribute types include image-text consistent, image-text inconsistent, image-text conflict, and image-text non-conflict types.

The image-text consistent attribute type is used to represent cases where the image query information and text query information describe the same event. For example, a user inputs an image of a red dress and provides the description text: "Please search for red dress products." The image-text inconsistent attribute type represents cases where the image query information and text query information describe different events. For example, a user inputs an image of a red dress but provides the description text: "Please search for laptop products." The image-text conflict attribute type refers to cases where the image and text share the same main subject but differ in their attributes. For example, a user inputs an image of a red dress and provides the description text: "Please search for the same style in a blue dress." The image-text non-conflict attribute type refers to cases where the image and text share the same main subject and their attributes are also consistent. For example, a user inputs an image of a red dress and provides the description text: "Please search for the same style in a red dress."

In practical applications, most platforms that provide online shopping functionality support both image-based and text-based product searches. To better meet user needs, some platforms also allow users to refine search results from image-based searches by further filtering with input text information, thereby providing feedback on the products the user wishes to query. However, certain user queries cannot be fully expressed through text or image alone, particularly in scenarios with higher query complexity. In such cases, the diversity and complexity of user needs make it challenging to precisely address their query requirements, significantly impacting the user query experience. Therefore, an effective solution is urgently needed to address the above issues.

Based on this, to accurately meet the user's query needs, a mixed image-text query function is provided. After receiving the image-text query information input by the user, the corresponding information attribute type can first be determined, which reflects the priority of the query results. Subsequently, the image query information and text query information within the image-text query information can be identified. At this stage, image-text fusion information can be constructed by combining the image query information and text query information, enabling the fusion of image and text queries for subsequent object retrieval. On this basis, object retrieval can be performed respectively for the image query information, text query information, and image-text fusion information to obtain image-retrieved objects, text-retrieved objects, and image-text retrieved objects. Considering that the retrieved objects correspond to different query information and may have varying relevance to the image-text query information, the retrieved objects can be ranked based on the information attribute type. This ensures the query intent of the image-text query information is accurately matched, enabling the determination of the target object corresponding to the image-text query information based on the ranking results.

Furthermore, when obtaining the image-text query information, considering that the user's input image query information may contain one or more object entities, an association object extraction process can be performed to ensure that the subsequent image-text query information can accurately complete the object query. In this embodiment, the specific implementation is as follows:
obtaining the image query information and text query information submitted by the user, and perform object recognition on the image query information.

Specifically, object recognition refers to the operation of identifying object entities contained in the image query information. In practical applications, object recognition can be implemented using an image recognition model. By inputting the image into the image recognition model, the model can detect the object entities contained in the image. Based on the detection results, the corresponding region coordinates of the object entities are provided. The image can then be cropped based on these region coordinates to obtain the object entities. Correspondingly, associated objects refer to the objects identified through object recognition on the image query information that the user intends to query.

Based on this, to ensure that the image-text query information closely matches the user's query needs, enabling the subsequent combination of image query information and text query information to efficiently and accurately query objects, the system performs object recognition on the image query information after receiving the image and text query information submitted by the user. This allows the system to determine the object entity the user intends to query, i.e., the associated object. On this basis, the image-text query information can be constructed using the associated object and the text query information for subsequent use.

In practical applications, when the image query information contains only a single object entity, the image-text query information can be directly constructed based on the image and text, thereby improving the efficiency of object queries.

In summary, by constructing image-text query information through object recognition on the image query information, the fusion of image and text can better match the user's query needs, thereby improving the accuracy of subsequent object query results.

Furthermore, in cases where the image query information contains multiple candidate associated objects, user interaction can be introduced to avoid errors, allowing the user to select the associated object for use. In this embodiment, the specific implementation is as follows:

when the recognition results indicate that the image query information contains multiple candidate associated objects, feedback the selection options corresponding to these candidate associated objects to the user. Receive the selection request submitted by the user regarding these options and determine the associated object from the multiple candidate associated objects based on the selection request.

Specifically, candidate associated objects refer to multiple object entities obtained from object recognition on the image query information. Correspondingly, selection options refer to the feedback provided to the user, allowing them to determine the object they intend to query from the multiple candidate associated objects. A selection request is the user's submitted request specifying the associated object.

Based on this, considering that in practical applications the environment in which users capture images can be complex and may include one or more object entities, different object entities could impact subsequent query results. When the recognition results indicate that the image query information contains multiple candidate associated objects, the system can provide feedback to the user with selection options corresponding to these candidate associated objects. The user can then make a selection, and upon receiving the user's selection request, the system can determine the associated object from the multiple candidate associated objects based on the selection request. This associated object can then be used for constructing subsequent query information. inputting the associated object and the text query information into the image-text information processing model. Extract the object attribute information corresponding to the associated object through the image-text information processing model, and construct the image-text query information based on the object attribute information and the text query information.

In summary, by using an interactive approach to determine the associated object that matches the user's query needs, the accuracy of constructing image-text query information can be further improved.

After obtaining the associated object and text query information, they can be rewritten using a multi-modal information processing model to ensure that the resulting image-text query information better aligns with the user's object query intent, achieving full fusion of image and text. In this embodiment, the specific implementation is as follows:
inputting the associated object and the text query information into a multi-modal information processing model. Extract the object attribute information corresponding to the associated object using the multi-modal information processing model, and construct the image-text query information based on the object attribute information and the text query information.

Specifically, a multi-modal information processing model refers to a large-scale multi-modal model capable of processing and fusing information such as text, images, and audio. This ensures that the fused results retain both image attributes and text attributes, meeting the requirements for subsequent use. Correspondingly, object attribute information refers to the attribute description information obtained by extracting attribute information from the image-form associated object. By fusing this information with the text query information, image-text query information that reflects both image and text attributes can be obtained.

Based on this, when fusing the associated object and text query information, considering that the associated object is of an image type and the text query information is of a text type, cross-modal information fusion can be achieved by inputting the associated object and text query information into a multi-modal information processing model. Through the multi-modal information processing model, the object attribute information corresponding to the associated object can be extracted. On this basis, the image-text query information can be constructed using the object attribute information and the text query information, thereby achieving information fusion to obtain image-text query information that matches the user's query intent for subsequent use.

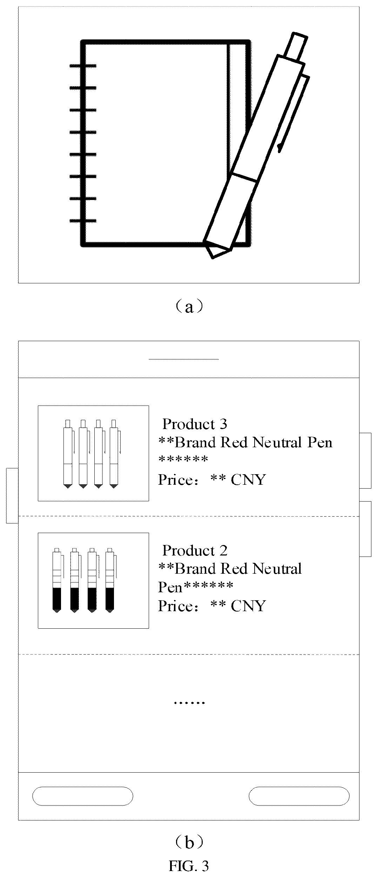

As an example, when a user queries for desired products on a shopping platform, the platform provides both an image input interface and a text input interface. The platform receives an image submitted by the user through the image input interface, as shown in FIG. 3(a). The image contains two types of products: a neutral pen and a notebook. The system can recognize the image and identify the neutral pen and notebook, then present this information to the user to confirm which product they want to search for. The user specifies the desire to search for the neutral pen, and the accompanying text input is "I want the same style of red neutral pen." On this basis, a multi-modal large model can be used to understand the user's image-text query needs. The model can extract the primary product in the image (the neutral pen) and the corresponding attribute information (e.g., click type, black neutral pen, Brand A, etc.). This attribute information can then be fused with the text information to form an image-text semantic query. The resulting query can then be used to meet the user's product search requirements in subsequent processes.

In summary, by adopting a multi-modal information processing model to fuse text and image information, query information containing both image and text semantics can be obtained, enabling more accurate targeting of the desired object in subsequent processes.

After constructing the image-text query information, considering that the information attribute type corresponding to the image-text query information serves as the basis for adjusting the retrieval object ranking order, and that different information attribute types determine different ranking methods, the information type can be determined through a process of extracting and comparing object information. In this embodiment, the specific implementation is as follows:
determining the first object information corresponding to the image query information based on the object recognition results, and perform entity extraction on the text query information to determine the second object information corresponding to the text query information. Based on the first object information and the second object information, detect whether there is an attribute conflict between the image query information and the text query information. If a conflict exists, determine the information attribute type corresponding to the image-text query information as the "image-text conflict attribute type." If no conflict exists, determine the information attribute type corresponding to the image-text query information as the "image-text non-conflict attribute type."

Specifically, the first object information refers to the object description information determined after performing object recognition on the image query information, which is used to describe the attributes of the object. The second object information refers to the object description information corresponding to the associated text query information determined after performing entity extraction on the text query information. Correspondingly, the "image-text conflict attribute type" refers to a type where there is an attribute conflict between the image query information and the text query information. Conversely, the "image-text non-conflict attribute type" refers to a type where no attribute conflict exists between the image query information and the text query information.

Based on this, after obtaining the image-text query information, object recognition can be performed on the image query information to determine the first object information corresponding to the image query information based on the recognition results. Additionally, entity extraction can be performed on the text query information to determine the second object information corresponding to the text query information.

On this basis, the first object information and the second object information can be compared. If the first object information and the second object information are consistent, it indicates that the image query information and text query information submitted by the user are consistent descriptions. For example, if the user uploads an image of a red dress and provides the text "Please search for a dress of the same style and color," it can be determined that there is no conflict between the image and text. In this case, the information attribute type corresponding to the image-text query information is identified as the "image-text non-conflict attribute type." During the subsequent retrieved object ranking process, the weights of the image and text dimensions can be increased, while the weight of the image-text dimension is reduced, thereby ensuring the accuracy of the retrieval results.

If the first object information and the second object information are inconsistent, it indicates that the image query information and text query information submitted by the user are conflicting descriptions. For example, if the user uploads an image of a red dress and provides the text "Please search for a dress of the same style in blue," it can be determined that there is a conflict between the image and text. In this case, the information attribute type corresponding to the image-text query information is identified as the "image-text conflict attribute type." During the subsequent retrieved object ranking process, the weight of the image-text dimension can be increased, while the weights of the image and text dimensions are reduced, thereby ensuring the accuracy of the retrieval results.

In summary, by determining whether the first object information and the second object information are consistent to identify whether the information attribute type is conflicting or non-conflicting, the accuracy of object ranking in subsequent processes can be improved.

**S204:** identifying the image query information and the text query information within the image-text query information, and constructing image-text fusion information based on the image query information and the text query information.

Specifically, after obtaining the image-text query information, to enable object retrieved from a plurality of dimensions and improve retrieved coverage, the image query information and text query information within the image-text query information can be identified. Multi-modal fusion information can then be constructed based on the image query information and text query information. This allows for subsequent object retrieved from the image dimension, text dimension, and image-text dimension, thereby enhancing the diversity and richness of the retrieved results. On this basis, the target object can be further filtered to ensure the accuracy of the query results. The image-text fusion information refers to the vector representation obtained by integrating the image query information and text query information.

Furthermore, when constructing image-text fusion information, considering that this information will be used for object retrieved operations, and to ensure that the retrieved results are more focused on image-text fusion attributes, feature fusion can be employed to determine the image-text fusion information. The specific implementation in this embodiment is as follows:
inputting the image query information and text query information into an image-text representation model. Use the image-text representation model to extract the image query features corresponding to the image query information and the text query features corresponding to the text query information. Perform feature fusion on the image query features and text query features to obtain the image-text fusion features, and use these fused features as the image-text fusion information.

Specifically, the image-text representation model refers to a model capable of fusing image features and text features. It can be implemented using an image-text representation model, such as BGE-visualized-base, or other image-text fusion models can be selected in practical applications. This embodiment does not impose any limitations on the choice of the model. Image query features refer to the feature representation corresponding to the image query information. Text query features refer to the feature representation corresponding to the text query information. Multi-modal fusion features are the vector representation obtained by fusing the image query features and text query features.

Based on this, considering that a single search method cannot accurately respond to the user's query needs, for example, if a user uploads an image of a red dress and describes, "Please recommend the same style in a blue dress," the results can be problematic. Typically, the product pool retrieved through image-based search would primarily consist of red dresses, while the product pool retrieved through text-based search would primarily consist of blue dresses, most of which differ in style from the original image. This happens because, although the image-text query information partially integrates image and text features, it often overlooks a significant portion of the image semantics.

To achieve cross-modal information fusion, the image query information and text query information can be input into an image-text representation model. The model extracts the image query features corresponding to the image query information and the text query features corresponding to the text query information. On this basis, feature fusion is performed on the image query features and text query features to obtain the image-text fusion features, which are used as the image-text fusion information. This approach ensures the thorough integration of image semantics and text semantics, improving the accuracy of subsequent object retrieved. It allows for the retrieval of objects that may be overlooked by either image-based or text-based retrieve alone.

Continuing with the previous example, after determining the image-text semantic query, to enable multi-modal retrieve in addition to image-based and text-based retrieve, the gel pen image and the text information "I want the same style red gel pen" can be input into an image-text representation model. The model extracts the image feature V1 corresponding to the gel pen image and the text feature V2 corresponding to the text "I want the same style red gel pen." By fusing the image feature V1 and text feature V2, the image-text fusion feature V can be obtained. This fused feature V can then be used in subsequent retrieve operations that combine image, text, and image-text features, thereby improving the accuracy and diversity of product retrieve.

In summary, by using an image-text representation model to integrate image query information and text query information, semantic-level information fusion can be achieved, making it more convenient for subsequent operations.

**S206:** performing object retrieval for the image query information, text query information, and image-text fusion information respectively to obtain an image-retrieved object, a text-retrieved object, and an image-text retrieved object.

Specifically, after obtaining the image query information, text query information, and image-text fusion information, object retrieval can be performed respectively to ensure the diversity of retrieved objects. This means retrieving image-retrieved objects based solely on the image query information, text-retrieved objects based on the text query information, and image-text retrieved objects based on the image-text fusion information. Subsequently, the retrieved objects from each type of information can be ranked, and the target object corresponding to the image-text query information can be selected after the ranking process.

The image-retrieved objects specifically refer to the objects retrieved based on the image query information, the text-retrieved objects specifically refer to the objects retrieved based on the text query information, and the image-text retrieved objects specifically refer to the objects retrieved based on the image-text fusion information. The image-text retrieved operation can retrieve objects with conflicting image-text attributes, thereby enhancing the diversity of retrieved objects. Here, "object" refers to the result that needs to be queried in the current scenario. For example, in an online shopping scenario, the object could be the retrieved products; in a text search scenario, the object could be the retrieved articles; and in an image search scenario, the object could be the retrieved images. In practical applications, the type of object is determined based on the actual application scenario, and no limitations are imposed in this embodiment.

During specific implementation, when retrieving objects based on image and text information, a candidate object set can be predefined, and retrieval units corresponding to different modalities can be configured. These retrieval units perform object retrieval within the candidate object set based on the information of their respective modalities, thereby obtaining image-retrieved objects and text-retrieved objects.

Furthermore, after obtaining the image query information, text query information, and image-text fusion information, it is noted that image query information and text query information correspond to single-modal data, making their retrieval processes relatively straightforward. However, image-text fusion information combines both image and text modalities. To improve retrieval accuracy, a feature similarity calculation approach can be used for object retrieval. The specific implementation in this embodiment is as follows:
determining the candidate object features corresponding to the objects in the candidate object set. Input these candidate object features and the image-text fusion features into a multi-modal object retrieval model. Using the multi-modal object retrieval model to calculate the feature similarity between the image-text fusion features and the candidate object features. Based on the feature similarity, filter the target candidate objects from the candidate object set and designate these target candidate objects as the image-text fusion retrieval objects.

Specifically, candidate object set refers to a collection of objects to be retrieved, such as a product set, text set, image set, etc. Candidate object features refer to the vector representations corresponding to each object in the candidate object set. Multi-modal object retrieval model refers to a multi-modal large model with object retrieval capabilities. This model can take the image-text fusion information as input and use it to filter and identify retrieval objects from the candidate object set that match the image-text fusion information. Feature similarity refers to the similarity between the image-text fusion information and the candidate object features of each candidate object in the set.

Based on this, to improve the efficiency and accuracy of object retrieval using image-text fusion information, a multi-modal object retrieval model can be employed. Specifically: identify the features corresponding to each candidate object in the candidate object set, input the candidate object features and the image-text fusion features into the multi-modal object retrieval model; using the multi-modal object retrieval model to calculate the feature similarity between the image-text fusion features and the features of each candidate object; after obtaining the feature similarity scores, ranking the candidate objects in descending order of similarity; choosing the top-N objects as the image-text fusion retrieval objects. These top-N objects can then be combined with the image-retrieved objects and text-retrieved objects for further selection of the final target object.

Continuing with the previous example, after obtaining the gel pen image, the text information "I want the same style red gel pen", and the image-text fusion feature V, a three-path retrieval process can be performed based on these three types of information: Image-based retrieval: retrieve products corresponding to the gel pen image to obtain products 1, 2, 3, and 4. Text-based retrieval: retrieve products corresponding to the text information "I want the same style red gel pen," to obtain products 3, 5, 6, and 7. Multi-modal fusion Retrieval: use the image-text fusion feature V for product retrieval. Calculate the feature similarity between V and each product, then select the top 4 products based on similarity scores. This results in products 3, 8, 9, and 10. On this basis, products 1 through 10 are combined into a unified candidate pool. From this pool, products that best match the user's query can be selected and recommended for the user to choose from. This process ensures that the recommendations align with the user's intent, leveraging the strengths of image, text, and fused image-text retrievals.

In summary, by utilizing model-based feature similarity calculations for object retrieval using image-text fusion information, it is possible to retrieval objects that might be overlooked by image-based and text-based retrieval alone. This approach ensures that the retrieved objects align more accurately with the user's query intent, thereby improving the precision of the retrieved results.

**S208:** ranking the image-retrieved object, the text-retrieved object, and the image-text retrieved object according to the information attribute type, and determine a target object corresponding to the image-text query information based on a ranking result.

Specifically, after obtaining the image-retrieved objects from the image query information, the text-retrieved objects from the text query information, and the image-text retrieved objects from the image-text fusion information, it is considered that objects retrieved from different modalities may exhibit varying characteristics. To identify the object that best matches the user's query needs, the image-retrieved objects, text-retrieved objects, and image-text retrieved objects can be ranked based on the information attribute type. The ranking results reflect the priority of how well different objects match the image-text query information. Accordingly, the target object corresponding to the image-text query information can be determined based on the ranking results, allowing the system to provide feedback to the user about the most likely target object they are querying. The target object refers to the result retrieved based on the image-text query information, which could be text, a product, an image, etc.

In practical applications, when ranking image-retrieved objects, text-retrieved objects, and image-text retrieved objects, the ranking must be performed according to the information attribute type. If the information attribute type is identified as the "image-text consistent attribute type," the image-retrieved objects are prioritized in the ranking process. Conversely, if the information attribute type is identified as the "image-text inconsistent attribute type," the image-text retrieved objects are prioritized. This ensures that the ranking results align with the user's object query needs.

Furthermore, when ranking image-retrieved objects, text-retrieved objects, and image-text retrieved objects, it is important to consider that the objects retrieved through different retrieval operations vary and have different levels of relevance to the user's query needs. Therefore, the weight of the scores can be adjusted based on the information attribute type to ensure that the ranking results better match the user's needs. In this embodiment, the specific implementation is as follows:
determining the image retrieval score corresponding to the image-retrieved objects, the text retrieval score corresponding to the text-retrieved objects, and the image-text retrieval score corresponding to the image-text retrieved objects based on a predefined ranking strategy. Update the image retrieval score, text retrieval score, and image-text retrieval score based on the information attribute type to obtain the target image retrieval score, target text retrieval score, and target image-text retrieval score. Rank the image-retrieved objects, text-retrieved objects, and image-text retrieved objects based on the target image retrieval score, target text retrieval score, and target image-text retrieval score.

Specifically, the image retrieval score refers to the score assigned to the objects retrieved based on the image query information, reflecting their relevance to the image-text query information. The text retrieval score refers to the score assigned to the objects retrieved based on the text query information, reflecting their relevance to the image-text query information. The image-text retrieval score refers to the score assigned to the objects retrieved based on the image-text fusion information, reflecting their relevance to the image-text query information. Correspondingly, the target image retrieval score, target text retrieval score, and target image-text retrieval score refers to the scores obtained by applying weighted adjustments to the initial retrieval scores based on the information attribute type. These scores reflect the degree of matching between each retrieved object and the image-text query information.

Based on this, after obtaining the objects retrieved from each type of information, and considering that different information attribute types reflect different user query intents, a predefined ranking strategy can be used to determine the image retrieval score for image-retrieved objects, the text retrieval score for text-retrieved objects, and the image-text retrieval score for image-text retrieved objects. On this basis, the image retrieval score, text retrieval score, and image-text retrieval score can be updated based on the information attribute type, thereby determining the target image retrieval score, target text retrieval score, and target image-text retrieval score through a weighted adjustment process to match the user's query needs. Subsequently, the objects can be ranked based on the target image retrieval score, target text retrieval score, and target image-text retrieval score. This ensures that the objects most closely matching the user's query needs are ranked higher, facilitating the subsequent selection of the target object.

It should be noted that when calculating the image retrieval score corresponding to an image-retrieved object, it involves calculating the image similarity, text similarity, and image-text similarity of the image-retrieved object. These similarity scores are then weighted and summed to obtain the image retrieval score for the image-retrieved object. Similarly, for a text-retrieved object, its text retrieval score is calculated by computing the image similarity, text similarity, and image-text similarity of the text-retrieved object, followed by weighting and summing these similarity scores to derive the text retrieval score. For an image-text retrieved object, its image-text retrieval score is also calculated by computing the image similarity, text similarity, and image-text similarity of the image-text retrieved object and then performing a weighted summation of these scores to obtain the final image-text retrieval score. By using this approach to calculate the retrieval scores for each object, the scores are aligned, ensuring that the subsequent ranking based on these scores is more reasonable and accurate.

Furthermore, after calculating the scores, considering that different information attribute types may affect the final query results, the pre-calculated scores-comprising similarities from the three dimensions (image similarity, text similarity, and image-text fusion similarity)--can be adjusted by applying weights based on the information attribute type. This adjustment ensures that the final target scores are more aligned with the current query needs, facilitating the accurate selection of the target object to provide precise feedback to the user.

In summary, by using a weighted adjustment approach to rank the retrieval objects, the ranking results can better align with the user's query needs, thereby improving the accuracy of target object selection.

Furthermore, to ensure that the final target object provided to the user highly aligns with the user's query needs, object category information can be utilized to filter the retrieval objects. The specific implementation in this embodiment is as follows:
inputting the image-text query information into an object category prediction model to process and obtain the corresponding object category information for the query; determining an object sequence based on the ranking results, including: filtering the objects in the sequence according to the predicted object category information; determining the target object corresponding to the image-text query information based on the filtered results.

Specifically, the object category prediction information refers to the predicted information regarding the category to which the queried object belongs. Based on this object category information, it is possible to filter objects from the ranking results that better match the user's query needs. Correspondingly, the object sequence refers to the sequence of objects arranged based on their scores.

Based on this, to improve the accuracy of determining the target object, the image-text query information can be input into an object category prediction model for processing to determine the object category information corresponding to the image-text query information based on the processing results. Subsequently, when determining the target object, an object sequence can first be determined based on the ranking results. Then, the object sequence can be filtered according to the object category information, and the target object corresponding to the image-text query information can be determined based on the filtering results.

Following the above example, after determining products 1 to 10, it is identified that the user's input image and text exhibit an inconsistency issue between the image and text. Therefore, the weight of products retrieved based on the image-text feature vector V can be increased. On this basis, the similarity between each product and the user's input information can be calculated. According to the results, the similarity ranking is determined as follows: product 3 > product 2 > product 1 > product 4 > product 5 > product 6 > product 7 > product 8 > product 9 > product 10. Additionally, it is confirmed that the user intends to search for neutral pens. At this stage, further filtering can be applied to products 1-10 to ensure they align with the user's query requirements. As a result, products 3, 2, 1, 4, 5, 6, 7, and 8 are determined to meet the user's search intent. These products can then be displayed to the user in a product display interface, as shown in FIG. 3(b), to facilitate the purchase of a red neutral pen.

The information processing method provided in this embodiment aims to accurately meet the user's query needs by offering a mixed image-text query function. After obtaining the image-text query information input by the user, the method first determines the information attribute type corresponding to the image-text query information, which reflects the priority of the query results. Subsequently, the method identifies the image query information and text query information within the image-text query information. Based on this, image-text fusion information can be constructed by combining the image query information and text query information, enabling the integration of image and text queries for subsequent object retrieval. On this basis, object retrieval can be performed respectively for the image query information, text query information, and image-text fusion information, to obtain image-retrieved objects, text-retrieved objects, and image-text retrieved objects. Considering that the retrieved objects correspond to different types of query information and have varying relevance to the image-text query information, the method ranks the image-retrieved objects, text-retrieved objects, and image-text retrieved objects based on the information attribute type. This ensures that the target object corresponding to the image-text query information can be determined according to the ranking results. By accurately aligning the object retrieval process with the user's query intent, this method enables the system to provide more precise query results, ultimately delivering more accurate feedback to the user for improved usability.

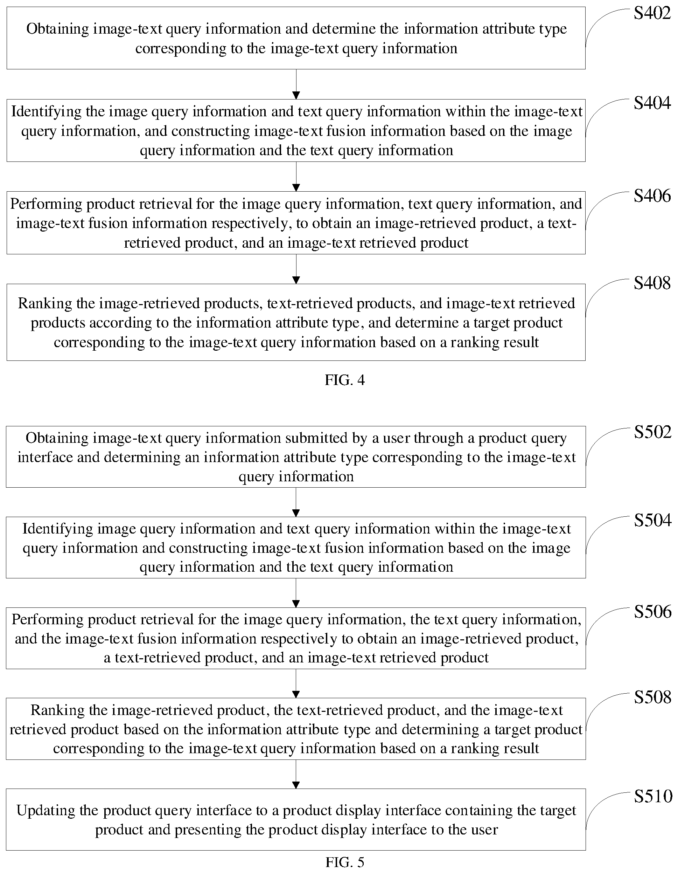

Refer to FIG. 4, which illustrates a flowchart of a product query method provided in one embodiment of the present disclosure. The method specifically includes the following steps:
**S402:** obtaining image-text query information and determine the information attribute type corresponding to the image-text query information;
**S404:** identifying the image query information and text query information within the image-text query information, and constructing image-text fusion information based on the image query information and the text query information;
**S406:** performing product retrieval for the image query information, text query information, and image-text fusion information respectively, to obtain an image-retrieved product, a text-retrieved product, and an image-text retrieved product;
**S408:** ranking the image-retrieved products, text-retrieved products, and image-text retrieved products according to the information attribute type, and determine a target product corresponding to the image-text query information based on a ranking result.

The contents not described in detail in the product query method provided in this embodiment can refer to the same or corresponding descriptions in the aforementioned embodiments. This embodiment will not be further elaborated here.

Refer to FIG. 5, which illustrates a flowchart of another product query method provided in an embodiment of the present disclosure, specifically including the following steps.
**S502:** obtaining image-text query information submitted by a user through a product query interface and determining an information attribute type corresponding to the image-text query information;
**S504:** identifying image query information and text query information within the image-text query information and constructing image-text fusion information based on the image query information and the text query information;
**S506:** performing product retrieval for the image query information, the text query information, and the image-text fusion information respectively to obtain an image-retrieved product, a text-retrieved product, and an image-text retrieved product;
**S508:** ranking the image-retrieved product, the text-retrieved product, and the image-text retrieved product based on the information attribute type and determining a target product corresponding to the image-text query information based on a ranking result;
**S510:** updating the product query interface to a product display interface containing the target product and presenting the product display interface to the user.

Specifically, to support a more flexible product purchasing experience for users, the system can determine the information attribute type corresponding to the image-text query information after receiving the query submitted by the user through the product query interface. The information attribute type reflects the priority of the queried results. Subsequently, the system identifies the image query information and text query information within the image-text query information. Based on this, image-text fusion information can be constructed by combining the image query information and text query information, enabling product retrieval using the fused information. On this basis, product retrieval can be performed respectively for the image query information, text query information, and image-text fusion information to obtain image-retrieved products, text-retrieved products, and image-text retrieved products. Considering that retrieved products correspond to different query information and have varying levels of relevance to the image-text query information, the system ranks the image-retrieved products, text-retrieved products, and image-text retrieved products according to the information attribute types. This ensures the query intent of the image-text query information is accurately matched, enabling the determination of the target product based on the ranking results. Finally, the product query interface is updated to a product display interface that includes the target product, which is presented to the user, facilitating the user's product purchasing process.

The details of another product query method provided in this embodiment that are not described in detail can be referred to in the same or corresponding descriptions of the aforementioned embodiments. This embodiment will not be further elaborated here.

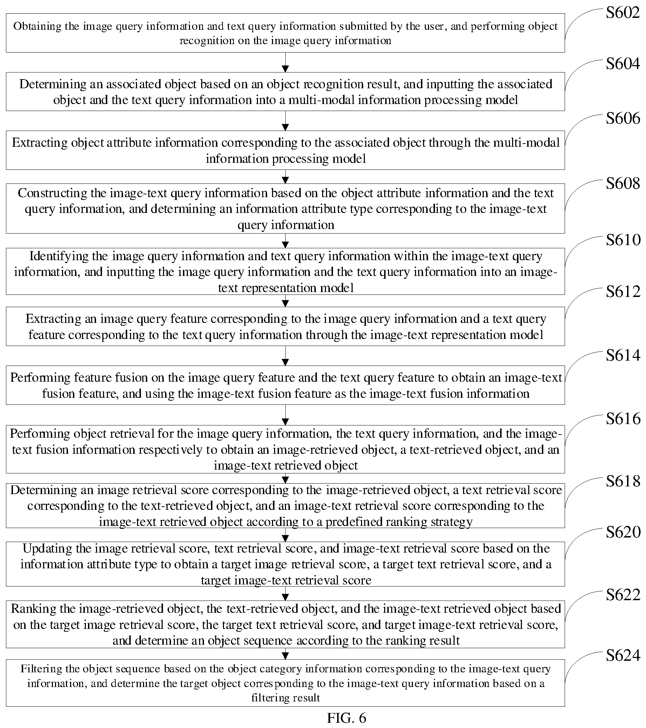

The following describes the information processing method provided in the present disclosure, using its application in a document search scenario as an example, with reference to FIG. 6. FIG. 6 illustrates a process flowchart of an information processing method according to one embodiment of the present disclosure, including the following steps:
**S602:** obtaining the image query information and text query information submitted by the user, and performing object recognition on the image query information;
**S604:** determining an associated object based on an object recognition result, and inputting the associated object and the text query information into a multi-modal information processing model;
**S606:** extracting object attribute information corresponding to the associated object through the multi-modal information processing model;
**S608:** constructing the image-text query information based on the object attribute information and the text query information, and determining an information attribute type corresponding to the image-text query information;
**S610:** identifying the image query information and text query information within the image-text query information, and inputting the image query information and the text query information into an image-text representation model;
**S612:** extracting an image query feature corresponding to the image query information and a text query feature corresponding to the text query information through the image-text representation model;
**S614:** performing feature fusion on the image query feature and the text query feature to obtain an image-text fusion feature, and using the image-text fusion feature as the image-text fusion information;
**S616:** performing object retrieval for the image query information, the text query information, and the image-text fusion information respectively to obtain an image-retrieved object, a text-retrieved object, and an image-text retrieved object.

For the object retrieval based on the image-text fusion information to obtain image-text retrieved objects, the process includes: determining the candidate object features corresponding to the candidate objects in the candidate object set, and inputting the candidate object features and the image-text fusion features into a multi-modal object retrieval model; calculating the feature similarity between the multi-modal fusion features and the candidate object features using the image-text object retrieval model; filtering the target candidate objects from the candidate object set based on the feature similarity, and designating the target candidate objects as the image-text retrieved objects.
**S618:** determining an image retrieval score corresponding to the image-retrieved object, a text retrieval score corresponding to the text-retrieved object, and an image-text retrieval score corresponding to the image-text retrieved object according to a predefined ranking strategy;
**S620:** updating the image retrieval score, text retrieval score, and image-text retrieval score based on the information attribute type to obtain a target image retrieval score, a target text retrieval score, and a target image-text retrieval score;
**S622:** ranking the image-retrieved object, the text-retrieved object, and the image-text retrieved object based on the target image retrieval score, the target text retrieval score, and target image-text retrieval score, and determine an object sequence according to the ranking result;
**S624:** filtering the object sequence based on the object category information corresponding to the image-text query information, and determine the target object corresponding to the image-text query information based on a filtering result.

In summary, to precisely meet users' query needs, a mixed image-text query function is provided. Upon receiving the user's image-text query information, the corresponding information attribute type is first determined, which reflects the priority of the queried results. Subsequently, the image query information and text query information within the image-text query information can be identified. Based on this, image-text fusion information is constructed by integrating the image query and text query information, enabling subsequent object retrieval operations using the fused information. On this basis, object retrieval can be performed respectively for the image query information, text query information, and image-text fusion information, to obtain image-retrieved objects, text-retrieved objects, and image-text retrieved objects, respectively. Given that the retrieved objects correspond to different query types and their relevance to the image-text query information varies, the retrieval objects can be ranked according to the information attribute type. This ranking enables the determination of target objects corresponding to the image-text query information based on the ranking results. This approach ensures more precise alignment with user query needs during the query process, thereby providing users with more accurate query results for their use.

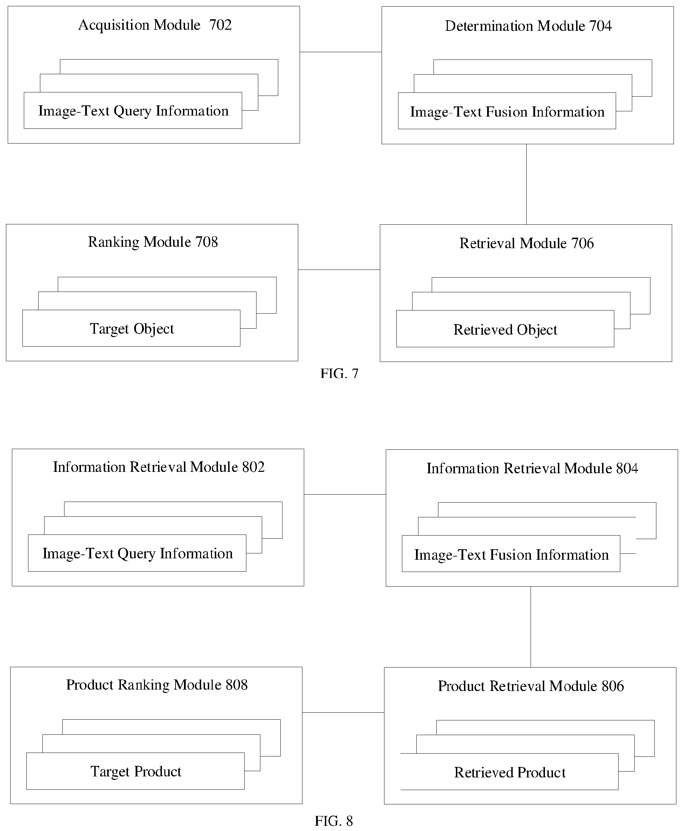

Corresponding to the method embodiments described above, the present disclosure also provides an embodiment of an information processing apparatus. FIG. 7 illustrates a structural schematic diagram of an information processing apparatus provided in one embodiment of the present disclosure. As shown in FIG. 7, the apparatus includes:
an Acquisition Module 702: configured to acquire image-text query information and determine an information attribute type corresponding to the image-text query information;
a Determination Module 704: configured to identify the image query information and text query information within the image-text query information and to construct image-text fusion information based on the image query information and the text query information;
a Retrieval Module 706: configured to perform object retrieval for the image query information, the text query information, and the image-text fusion information respectively, to obtain an image-retrieved object, a text-retrieved object, and an image-text retrieved object;
a Ranking Module 708: configured to rank the image-retrieved object, the text-retrieved object, and the image-text retrieved object based on the information attribute type and to determine a target object corresponding to the image-text query information based on a ranking result.

An optional embodiment, the acquisition module 702 is further configured to:
obtaining the image query information and text query information submitted by the user, and perform object recognition on the image query information; determine the associated object based on the object recognition results, and construct image-text query information based on the associated object and the text query information.

An optional embodiment, the acquisition module 702 is further configured to:
inputting the associated object and the text query information into the multi-modal information processing model; extract the object attribute information corresponding to the associated object through the multi-modal information processing model, and construct image-text query information based on the object attribute information and the text query information.

In an optional embodiment, the determination module 704 is further configured to:
inputting the image query information and the text query information into an image-text representation model; extract the image query features corresponding to the image query information and the text query features corresponding to the text query information through the image-text representation model; perform feature fusion on the image query features and the text query features to obtain image-text fusion features, and use the image-text fusion features as the image-text fusion information.

In an optional embodiment, the retrieval module 706 is further configured to:
determining the candidate object features corresponding to the candidate objects in the candidate object set and input the candidate object features and the image-text fusion features into a multi-modal object retrieval model; calculate the feature similarity between the image-text fusion features and the candidate object features through the multi-modal object retrieval model; filter the target candidate objects from the candidate object set based on the feature similarity and designate the target candidate objects as the image-text retrieval objects.

In an optional embodiment, the acquisition module 702 is further configured to:
determining the first object information corresponding to the image query information based on the object recognition results, and perform entity extraction for the text query information to determine the second object information corresponding to the text query information; detect whether there is an attribute conflict between the image query information and the text query information based on the first object information and the second object information; if so, determine that the information attribute type corresponding to the image-text query information is an "image-text conflict attribute type"; if not, determine that the information attribute type corresponding to the image-text query information is an "image-text no-conflict attribute type."

In an optional embodiment, the ranking module 708 is further configured to:
determining the image retrieval score corresponding to the image-retrieved objects, the text retrieval score corresponding to the text-retrieved objects, and the image-text retrieval score corresponding to the image-text retrieved objects based on a predefined ranking strategy. Update the image retrieval score, text retrieval score, and image-text retrieval score based on the information attribute type to obtain the target image retrieval score, target text retrieval score, and target image-text retrieval score. Rank the image-retrieved objects, text-retrieved objects, and image-text retrieved objects based on the target image retrieval score, target text retrieval score, and target image-text retrieval score.

In an optional embodiment, the device further includes:
a category prediction module, configured to input the image-text query information into an object category prediction model for processing, to obtain the object category information corresponding to the image-text query information;
the ranking module 708 is further configured to:
   determining an object sequence based on the ranking results; filter the object sequence according to the object category information, and determine the target object corresponding to the image-text query information based on the filtering results.

In an optional embodiment, the acquisition module 702 is further configured to:
in a case where the recognition results determine that the image query information contains a plurality of candidate associated objects, provide the user with selection options corresponding to the plurality of candidate associated objects; receive a selection request submitted by the user for the selection options, and determine the associated object among the plurality of candidate associated objects based on the selection request.

The information processing device provided in this embodiment is designed to accurately meet the user's query needs by offering a mixed image-text query functionality. After obtaining the user's input of image-text query information, the device can first determine the information attribute type corresponding to the query, with the information attribute type reflecting the priority of the query results. Subsequently, the image query information and text query information within the image-text query can be identified. Based on this, image-text fusion information is constructed by merging the image and text query information, enabling subsequent object retrieval based on the fusion information. On this basis, object retrieval can be performed respectively for the image query information, text query information, and image-text fusion information, to obtain image retrieved objects, text retrieved objects, and image-text retrieved objects, respectively. Given that the retrieved objects are derived from different query inputs and have varying degrees of relevance to the image-text query, ranking the retrieved objects based on their information attribute types allows the retrieval process to better align with the query's intent. The target object corresponding to the image-text query can then be determined based on the ranking results. This ensures that the query processing is more accurately aligned with user requirements, thereby providing more precise query results for user consumption.

The above provides an illustrative scheme for the information processing device in this embodiment. It should be noted that the technical solution of the information processing device aligns with the same concept as the technical solution of the aforementioned information processing method. Any details not explicitly described in the technical solution of the information processing device can refer to the descriptions of the technical solution of the information processing method.

Corresponding to the method embodiments described above, the present disclosure also provides a product query device embodiment. FIG. 8 illustrates a structural schematic diagram of a product query device provided in one embodiment of the present disclosure. As shown in FIG. 8, the device includes:
an information acquisition module 802, configured to acquire image-text query information and determine an information attribute type corresponding to the image-text query information;
an information determination module 804, configured to identify image query information and text query information within the image-text query information, and to construct image-text fusion information based on the image query information and the text query information;
a product retrieval module 806, configured to perform product retrieval operations for the image query information, the text query information, and image-text fusion information respectively, to obtaining an image retrieved product, a text retrieved product, and an image-text retrieved product;
a product ranking module 808, configured to rank the image-retrieved products, the text-retrieved product, and the image-text retrieved product based on the information attribute type and to determine a target product corresponding to the image-text query information based on a ranking result.

The above describes an illustrative scheme for a product query device according to this embodiment. It should be noted that the technical solution of the product query device shares the same concept as the technical solution of the product query method described above. Any details of the product query device's technical solution not explicitly described can be referred to in the description of the technical solution for the product query method provided above.

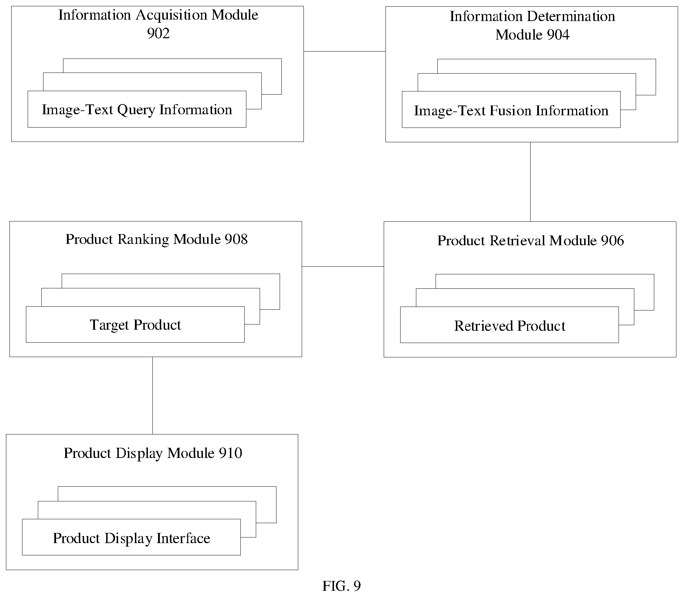

Corresponding to the method embodiments described above, the present disclosure also provides another embodiment of a product query device. FIG. 9 illustrates a schematic structural diagram of another product query device according to an embodiment of the present disclosure. As shown in FIG. 9, the device includes:
an information acquisition module 902, configured to acquire image-text query information submitted by a user through a product query interface and determine an information attribute type corresponding to the image-text query information;
an information determination module 904, configured to identify the image query information and text query information within the image-text query information and to construct image-text fusion information based on the image query information and the text query information;
a product retrieval module 906, configured to perform product retrieval for the image query information, the text query information, and the image-text fusion information respectively to obtain an image-retrieved product, a text-retrieved product, and an image-text retrieved product;
a product ranking module 908, configured to rank the image-retrieved product, the text-retrieved product, and the image-text retrieved product based on the specified information attribute type and to determine a target product corresponding to the image-text query information based on a ranking result;
a product display module 910, configured to update the product query interface to include a product display interface containing the target product and to display the product to the user.

The above describes an exemplary scheme for another product query apparatus in this embodiment. It should be noted that the technical solution of this product query apparatus is based on the same concept as the technical solution of the aforementioned product query method. Any details not explicitly described in the technical solution of this product query apparatus can be referred to in the description of the technical solution of the aforementioned product query method.

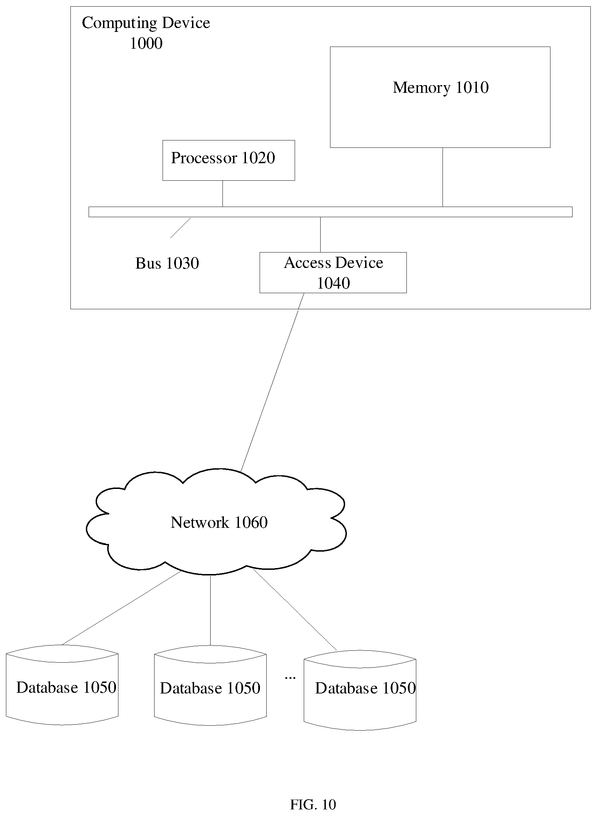

FIG. 10 illustrates a block diagram of a computing device 1000 according to one embodiment provided in the present disclosure. The components of the computing device 1000 include, but are not limited to, a memory 1010 and a processor 1020. The processor 1020 is connected to the memory 1010 via a bus 1030, and a database 1050 is used to store data.

The computing device 1000 also includes an access device 1040, which enables the computing device 1000 to communicate via one or more networks 1060. Examples of these networks include a Public Switched Telephone Network (PSTN), a Local Area Network (LAN), a Wide Area Network (WAN), a Personal Area Network (PAN), or a combination of communication networks such as the Internet. The access device 1040 may include one or more wired or wireless network interfaces of any type (e.g., a Network Interface Controller (NIC)), such as IEEE 802.11 Wireless Local Area Network (WLAN) interfaces, Worldwide Interoperability for Microwave Access (Wi-MAX) interfaces, Ethernet interfaces, Universal Serial Bus (USB) interfaces, cellular network interfaces, Bluetooth interfaces, or Near Field Communication (NFC) interfaces.

In one embodiment of the present disclosure, the aforementioned components of the computing device 1000, as well as other components not shown in FIG. 10, can also be connected to each other, for example, via a bus. It should be understood that the structural block diagram of the computing device shown in FIG. 10 is provided solely for illustrative purposes and is not intended to limit the scope of the present disclosure. Those skilled in the art may add or replace other components as needed.

The computing device 1000 can be any type of stationary or mobile computing device, including mobile computers or mobile computing devices (e.g., tablet computers, personal digital assistants, laptops, notebook computers, netbooks, etc.), mobile phones (e.g., smartphones), wearable computing devices (e.g., smartwatches, smart glasses, etc.), or other types of mobile devices, as well as stationary computing devices such as desktop computers or personal computers (PCs). The computing device 1000 can also be a mobile or stationary server.

The processor 1020 is used to execute the following computer-executable instructions, which, when executed by the processor, implement the steps of the above-described information processing method or product query method.

The above describes an illustrative scheme of a computing device in this embodiment. It should be noted that the technical solution of this computing device shares the same concept as the technical solution of the aforementioned information processing method or product query method. Any details not explicitly described in the technical solution of the computing device can refer to the description of the technical solution of the aforementioned information processing method or product query method.

The present disclosure also provides an embodiment of a computer-readable storage medium, which stores computer-executable instructions. When executed by a processor, these computer-executable instructions implement the steps of the aforementioned information processing method or product query method.

The above describes an exemplary solution for a computer-readable storage medium in this embodiment. It should be noted that the technical solution for this storage medium is based on the same concept as the aforementioned information processing method or product query method. Any details of the storage medium's technical solution that are not explicitly described can be referred to in the descriptions of the aforementioned information processing method or product query method.

An embodiment of the present disclosure also provides a computer program. When the computer program is executed on a computer, it enables the computer to perform the steps of the aforementioned information processing method or product query method.

The above describes an exemplary implementation of a computer program in this embodiment. It should be noted that the technical solution of the computer program aligns with the same concept as the technical solutions of the aforementioned information processing method or product query method. Any details not explicitly described in the computer program's technical solution can be referenced in the descriptions of the aforementioned information processing method or product query method.

The present disclosure also provides an embodiment of a computer program product, which includes a computer program or instructions. When executed by a processor, the computer program or instructions implement the steps of the aforementioned information processing method or product query method.

The above is an illustrative embodiment of a computer program product provided in the present disclosure. It should be noted that the technical solution of this computer program product is based on the same concept as the technical solutions of the aforementioned information processing method or product query method. Details not explicitly described in the computer program product's technical solution can be referred to in the descriptions of the information processing method or product query method provided above.

The specific embodiments of the present disclosure have been described above. Other embodiments fall within the scope of the appended claims. In some cases, the actions or steps described in the claims may be performed in a different order than in the embodiments and still achieve the desired results. Furthermore, the processes depicted in the accompanying drawings do not necessarily require the specific or sequential order shown to achieve the desired results. In certain implementations, multitasking and parallel processing are also possible or may be advantageous.

The computer instructions include computer program code, which can be in the form of source code, object code, executable files, or some intermediate form. The computer-readable medium may include any entity or device capable of carrying the computer program code, such as recording media, USB drives, portable hard drives, magnetic disks, optical disks, computer memory, read-only memory (ROM), random access memory (RAM), electrical carrier signals, telecommunication signals, and software distribution media, among others. It should be noted that the contents of the computer-readable medium can be appropriately increased or reduced depending on patent practice requirements. For example, in some regions, according to patent practice, computer-readable media may exclude electrical carrier signals and telecommunication signals.

It should be noted that in the aforementioned method embodiments, for the sake of concise description, they have been presented as a series of action combinations. However, those skilled in the art should understand that the embodiments of the present disclosure are not limited by the described order of actions, as certain steps may be performed in a different sequence or simultaneously depending on the embodiments of the present disclosure. Furthermore, those skilled in the art should also understand that the embodiments described in the specification represent preferred embodiments, and the actions and modules involved are not necessarily required for all embodiments of the present disclosure.

In the above embodiments, the descriptions of each embodiment focus on different aspects, and portions not elaborated in one embodiment can refer to the relevant descriptions in other embodiments.

The disclosed preferred embodiments of the present disclosure are provided solely to facilitate explanation. The optional embodiments do not exhaustively describe all details nor limit the invention to the specific embodiments described. Clearly, numerous modifications and variations can be made based on the content of the present disclosure's embodiments. These embodiments are selected and specifically described to better illustrate the principles and practical applications of the present disclosure's embodiments, thereby enabling those skilled in the relevant field to understand and utilize the present disclosure effectively. The present disclosure is limited only by the claims and their full scope and equivalents.

## Claims

1. An information processing method, comprising:
obtaining image-text query information comprising image query information and text query information, and determining an information attribute type corresponding to the image-text query information;
identifying the image query information and the text query information within the image-text query information, and constructing image-text fusion information based on the image query information and the text query information;
performing object retrieval for the image query information, the text query information, and the image-text fusion information respectively to obtain an image-retrieved object, a text-retrieved object, and an image-text retrieved object;
ranking the image-retrieved object, the text-retrieved object, and the image-text retrieved object according to the information attribute type, and determining a target object corresponding to the image-text query information based on a ranking result.

2. The information processing method according to claim 1, wherein the step of obtaining the image-text query information comprises:
obtaining user-submitted image query information and text query information, and performing object recognition on the image query information;
determining an associated object based on an object recognition result, and constructing the image-text query information based on the associated object and the text query information;
optionally wherein constructing the image-text query information based on the associated object and the text query information comprises: inputting the associated object and the text query information into a multi-modal information processing model; extracting object attribute information corresponding to the associated object through the multi-modal information processing model, and constructing the image-text query information based on the object attribute information and the text query information.

3. The information processing method according to claim 2, wherein determining the information attribute type corresponding to the image-text query information comprises:
determining first object information corresponding to the image query information based on an object recognition result, and performing entity extraction on the text query information to determine second object information corresponding to the text query information;
detecting whether an attribute conflict exists between the image query information and the text query information based on the first object information and the second object information;
if yes, determining that the information attribute type corresponding to the image-text query information is a conflicting image-text attribute type;
if no, determining that the information attribute type corresponding to the image-text query information is a non-conflicting image-text attribute type;
optionally wherein determining the associated object based on the object recognition result comprises: determining, based on the recognition result, that the image query information includes a plurality of candidate associated objects; providing a user with a selection option corresponding to the plurality of candidate associated objects; obtaining a selection request submitted by the user in response to the selection option; and determining the associated object from the plurality of candidate associated objects based on the selection request.

4. The information processing method according to any one of claims 1 to 3, wherein constructing the image-text fusion information based on the image query information and the text query information comprises:
inputting the image query information and the text query information into an image-text representation model;
extracting an image query feature corresponding to the image query information and a text query feature corresponding to the text query information through the image-text representation model;
performing feature fusion on the image query feature and the text query feature to obtain an image-text fusion feature, and using the image-text fusion feature as the image-text fusion information;
optionally wherein performing object retrieval based on the image-text fusion information to obtain an image-text retrieved object comprises: determining a candidate object feature corresponding to a candidate object in a candidate object set, and inputting the candidate object feature and the image-text fusion feature into a multi-modal object retrieval model; calculating a feature similarity between the image-text fusion feature and the candidate object feature using the multi-modal object retrieval model; filtering a target candidate object from the candidate object set based on the feature similarity, and designating the target candidate object as the image-text retrieved object.

5. The information processing method according to any one of claims 1 to 4, wherein ranking the image-retrieved object, text-retrieved object, and image-text retrieved object based on the information attribute type comprises:
determining an image retrieval score corresponding to the image-retrieved object, a text retrieval score corresponding to the text-retrieved object, and an image-text retrieval score corresponding to the image-text retrieved object according to a predefined ranking strategy;
updating the image retrieval score, the text retrieval score, and the image-text retrieval score based on the information attribute type to obtain a target image-retrieval score, a target text-retrieval score, and a target image-text retrieval score;
ranking the image-retrieved object, the text-retrieved object, and the image-text retrieved object based on the target image retrieval score, the target text retrieval score, and the target image-text retrieval score.

6. The information processing method according to any one of claims 1 to 5, further comprising, prior to the step of ranking the image-retrieved object, text-retrieved object, and image-text retrieved object based on the information attribute type:
inputting the image-text query information into an object category prediction model for processing to obtain object category information corresponding to the image-text query information;
wherein determining the target object corresponding to the image-text query information based on the ranking result comprises:
determining an object sequence based on the ranking result;
filtering the object sequence based on the object category information corresponding to the image-text query information, and determining the target object corresponding to the image-text query information based on a filtering result.

7. A non-transitory computer-readable storage medium configured with instructions executable by one or more processors to cause the one or more processors to perform the information processing method of any one of claims 1 to 6.

8. An electronic device comprising:
one or more processors; and
one or more computer-readable memories coupled to the one or more processors and having instructions stored thereon that are executable by the one or more processors to perform the information processing method of any one of claims 1 to 6.

9. A method for product query, comprising:
obtaining image-text query information and determining an information attribute type corresponding to the image-text query information;
identifying image query information and text query information within the image-text query information, and constructing image-text fusion information based on the image query information and the text query information;
performing product retrieval for the image query information, the text query information, and the image-text fusion information respectively, to obtain an image-retrieved product, a text-retrieved product, and an image-text retrieved product;
ranking the image-retrieved product, the text-retrieved product, and the image-text retrieved product based on the information attribute type; and
determining a target product corresponding to the image-text query information based on a ranking result.

10. The method for product query according to claim 9, wherein the step of obtaining the image-text query information comprises:
obtaining user-submitted image query information and text query information, and performing object recognition on the image query information;
determining an associated object based on an object recognition result, and constructing the image-text query information based on the associated object and the text query information;
optionally wherein constructing the image-text query information based on the associated object and the text query information comprises: inputting the associated object and the text query information into a multi-modal information processing model; extracting object attribute information corresponding to the associated object through the multi-modal information processing model, and constructing the image-text query information based on the object attribute information and the text query information.

11. The method for product query according to claims 9 or 10, wherein determining the information attribute type corresponding to the image-text query information comprises:
determining first object information corresponding to the image query information based on an object recognition result, and performing entity extraction on the text query information to determine second object information corresponding to the text query information;
detecting whether an attribute conflict exists between the image query information and the text query information based on the first object information and the second object information;
if yes, determining that the information attribute type corresponding to the image-text query information is a conflicting image-text attribute type;
if no, determining that the information attribute type corresponding to the image-text query information is a non-conflicting image-text attribute type.

12. The method for product query according to any one of claims 9 to 11, wherein determining the associated object based on the object recognition result comprises:
determining, based on the recognition result, that the image query information includes a plurality of candidate associated objects; providing a user with a selection option corresponding to the plurality of candidate associated objects;
obtaining a selection request submitted by the user in response to the selection option; and
determining the associated object from the plurality of candidate associated objects based on the selection request.

13. The method for product query according to any one of claims 9 to 12, wherein constructing the image-text fusion information based on the image query information and the text query information comprises:
inputting the image query information and the text query information into an image-text representation model;
extracting an image query feature corresponding to the image query information and a text query feature corresponding to the text query information through the image-text representation model;
performing feature fusion on the image query feature and the text query feature to obtain an image-text fusion feature, and using the image-text fusion feature as the image-text fusion information;
optionally wherein performing product retrieval based on the image-text fusion information to obtain an image-text retrieved product comprises: determining a candidate object feature corresponding to a candidate object in a candidate object set, and inputting the candidate object feature and the image-text fusion feature into a multi-modal object retrieval model; calculating a feature similarity between the image-text fusion feature and the candidate object feature using the multi-modal object retrieval model; filtering a target candidate object from the candidate object set based on the feature similarity, and designating the target candidate object as the image-text retrieved product.

14. The method for product query according to any one of claims 9 to 13, wherein ranking the image-retrieved product, text-retrieved product, and image-text retrieved product based on the information attribute type comprises:
determining an image retrieval score corresponding to the image-retrieved product, a text retrieval score corresponding to the text-retrieved product, and an image-text retrieval score corresponding to the image-text retrieved product according to a predefined ranking strategy;
updating the image retrieval score, the text retrieval score, and the image-text retrieval score based on the information attribute type to obtain a target image-retrieval score, a target text-retrieval score, and a target image-text retrieval score;
ranking the image-retrieved product, the text-retrieved product, and the image-text retrieved product based on the target image retrieval score, the target text retrieval score, and the target image-text retrieval score.

15. A method for product query, comprising:
obtaining image-text query information submitted by a user through a product query interface and determining an information attribute type corresponding to the image-text query information;
identifying image query information and text query information within the image-text query information, and constructing image-text fusion information based on the image query information and the text query information;
performing product retrieval for the image query information, the text query information, and the image-text fusion information respectively, to obtain an image-retrieved product, a text-retrieved product, and an image-text retrieved product;
ranking the image-retrieved product, the text-retrieved product, and the image-text retrieved product based on the information attribute type, and determining a target product corresponding to the image-text query information based on a ranking result;
updating the product query interface to a product display interface containing the target product and presenting the product display interface to the user.
